# FASCICULE DE BREVET EUROPEEN

(11) **EP 3 350 030 B1**
(45) Date de publication et mention de la délivrance du brevet: **06.11.2019**
(21) Numéro de dépôt: 16769964.4
(22) Date de dépôt: 16.09.2016
(51) Int. Cl.: B60R 25/24, B62D 15/02, H04Q 9/00

(54) **PROCÉDÉ DE COMMANDE D'UNE FONCTIONNALITÉ D'UN VÉHICULE AU MOYEN D'UN TERMINAL UTILISATEUR ET SYSTÈME DE COMMANDE ASSOCIÉ**
VERFAHREN ZUR STEUERUNG EINER FUNKTION EINES FAHRZEUGS MITTELS EINES BENUTZERENDGERÄTS UND ZUGEHÖRIGES STEUERUNGSVERFAHREN
METHOD FOR CONTROLLING A FUNCTIONALITY OF A VEHICLE BY MEANS OF A USER TERMINAL AND ASSOCIATED CONTROL SYSTEM

(30) Priorité: 18.09.2015 FR 1558835
(43) Date de publication de la demande: 25.07.2018
(73) Titulaire: Valeo Comfort and Driving Assistance, 94046 Créteil Cedex (FR)
(72) Inventeur: MENARD, Eric, 94046 Créteil Cedex (FR); GOUMY, Jean-Claude, 94046 Creteil Cedex (FR); LECONTE, Eric, 94046 Créteil Cedex (FR)
(74) Mandataire: Delplanque, Arnaud
(86) Numéro de dépôt international: PCT/EP2016/072063
(87) Numéro de publication internationale: WO 2017/046388

(56) Documents cités:
- EP-A1- 2 980 598
- WO-A1-2014/052059
- WO-A1-2015/003909
- WO-A1-2015/055732
- WO-A1-2015/097402
- CN-B- 103 956 071
- DE-A1-102008 033 925
- DE-A1-102008 039 156
- US-A1- 2011 257 817

## Description

### DOMAINE TECHNIQUE AUQUEL SE RAPPORTE L'INVENTION

La présente invention concerne la commande sans fil d'une fonctionnalité d'un véhicule.

Elle concerne plus particulièrement un procédé de commande d'une fonctionnalité d'un véhicule au moyen d'un terminal utilisateur et un système de commande associé.

L'invention s'applique particulièrement avantageusement dans le cas où la distance entre l'utilisateur et le véhicule est estimée au moyen d'un identifiant porté par l'utilisateur.

### ARRIERE-PLAN TECHNOLOGIQUE

Il est connu, par exemple dans les systèmes de type PEPS (pour *"Passive Entry* - *Passive Start"*), d'utiliser un identifiant porté par l'utilisateur du véhicule afin d'évaluer la distance séparant l'utilisateur du véhicule et d'activer ainsi automatiquement la mise en œuvre d'une fonctionnalité (telle que le déverrouillage des portes du véhicule) lorsque cette distance est inférieure à une valeur prédéfinie.

On a également proposé de commander certaines fonctionnalités d'un tel véhicule au moyen d'un terminal utilisateur, tel qu'un téléphone intelligent habituellement utilisé par l'utilisateur.

### OBJET DE L'INVENTION

Dans ce contexte, la présente invention propose un procédé de commande d'une fonctionnalité d'un véhicule au moyen d'un terminal utilisateur, selon la revendication 1.

On peut s'assurer ainsi que la personne qui manipule le terminal utilisateur porte bien également l'identifiant et est effectivement la personne autorisée à commander la fonctionnalité au moyen du terminal utilisateur.

La fonctionnalité peut être mise en œuvre seulement si en outre une distance entre le terminal utilisateur et le véhicule, ou une distance entre l'identifiant et le véhicule, est inférieure à un autre seuil prédéterminé.

Grâce à la vérification de la proximité de l'identifiant et du terminal utilisateur (comme indiqué plus haut), le test de la distance au véhicule d'un seul des dispositifs (identifiant ou terminal utilisateur) vaut également pour l'autre dispositif.

On peut prévoir par exemple d'évaluer la distance entre l'identifiant et le véhicule par mesure de puissance d'un signal électromagnétique généré par un module d'émission basse-fréquence équipant le véhicule, ce qui permet d'obtenir une évaluation précise de cette distance.

Grâce à la vérification de la proximité de l'identifiant et du terminal utilisateur, on peut utiliser cette évaluation précise lorsque l'on souhaite connaître la localisation du terminal utilisateur par rapport au véhicule, par exemple pour vérifier que le terminal utilisateur est suffisamment proche du véhicule pour que la mise en œuvre de la fonctionnalité soit autorisée.

Selon d'autres caractéristiques optionnelles et donc non limitatives :
- des données représentatives de la distance entre l'identifiant et le véhicule sont transmises de l'identifiant au véhicule ;
- des données représentatives de la distance entre l'identifiant et le véhicule sont transmises de l'identifiant au terminal utilisateur ;
- la distance entre l'identifiant et le terminal utilisateur est évaluée par mesure de puissance de signaux électromagnétiques échangés entre deux modules de communication équipant respectivement l'identifiant et le terminal utilisateur ;
- la distance entre l'identifiant et le terminal utilisateur est évaluée par le terminal utilisateur ;
- les données représentatives de la distance entre l'identifiant et le véhicule sont transmises du terminal utilisateur au véhicule ;
- des données indicatives d'une action sur une interface utilisateur sont transmises du terminal utilisateur au véhicule ;
- la fonctionnalité est une manœuvre de stationnement automatique.

Dans un mode de réalisation envisageable, les données représentatives de la distance entre l'identifiant et le véhicule sont transmises de l'identifiant au terminal utilisateur via une liaison sans fil en champ proche. Ainsi, lorsque la distance entre l'identifiant et le terminal utilisateur est supérieure à la portée de cette liaison sans fil en champ proche, cette liaison est interrompue ; les données représentatives de la distance entre l'identifiant et le véhicule ne peuvent donc pas parvenir à l'unité électronique de commande, ce qui constitue pour celle-ci une information représentative de la distance entre le terminal utilisateur et l'identifiant.

Autrement dit, l'invention propose également un procédé de commande d'une fonctionnalité d'un véhicule comprenant les étapes suivantes :
- mesure, par un identifiant, de la distance entre le véhicule et cet identifiant ;
- transmission d'une information représentative de ladite distance à un terminal utilisateur via une liaison sans fil en champ proche ;
- transmission de ladite information représentative de ladite distance du terminal utilisateur à une unité électronique du véhicule ;
- autorisation, par l'unité électronique, de la mise en œuvre de la fonctionnalité seulement si ladite distance est inférieure à un seuil.

Du fait de l'utilisation de la liaison sans fil en champ proche dans la chaîne de transmission de l'information représentative de la distance entre le véhicule et l'identifiant, le fonctionnement ne sera poursuivi (et la mise en œuvre de la fonctionnalité autorisée) que si l'identifiant est suffisamment proche du terminal utilisateur.

L'invention propose enfin un système de commande pour véhicule comprenant un module de communication conçu pour établir une liaison sans fil avec un terminal utilisateur et une unité électronique de commande conçue pour commander au moins une fonctionnalité du véhicule en fonction d'informations reçues du terminal utilisateur, selon la revendication 11.

Les caractéristiques optionnelles présentées ci-dessus en termes de procédé peuvent éventuellement s'appliquer, le cas échéant, à un tel système.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un exemple de contexte dans lequel peut être mise en œuvre l'invention ;
- la figure 2 représente schématiquement les éléments d'un véhicule, d'un terminal utilisateur et d'un identifiant utiles à la compréhension de l'invention ;
- la figure 3 est un logigramme représentant un exemple de procédé conforme à l'invention ;
- la figure 4 représente schématiquement les éléments d'un véhicule, d'un terminal utilisateur et d'un identifiant dans une variante de réalisation de l'invention ; et
- la figure 5 est un logigramme représentant un autre exemple de procédé conforme à l'invention.

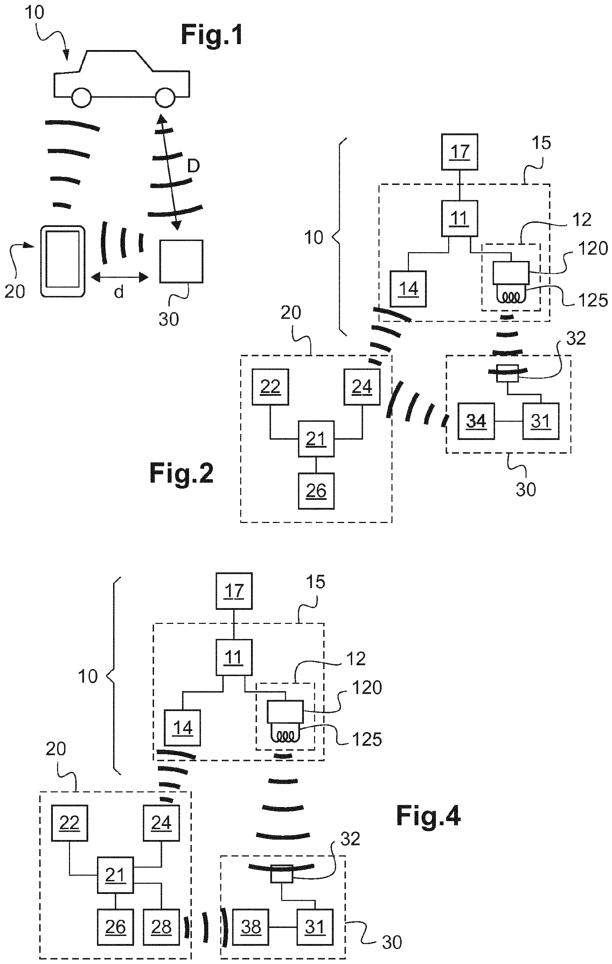

La figure 1 représente un exemple de contexte dans lequel peut être mise en œuvre l'invention.

Ce contexte est celui d'un véhicule 10 dont certaines fonctionnalités peuvent être commandées par un terminal utilisateur 20 manipulé par un utilisateur du véhicule 10, lequel utilisateur porte par ailleurs un identifiant 30 associé au véhicule 10.

Le terminal utilisateur 20 est par exemple un téléphone intelligent (couramment désigné par l'appellation anglaise équivalente *"smartphone"*), ou ordiphone. En variante, il pourrait s'agir par exemple d'une tablette électronique.

L'identifiant 30 est par exemple une clé ou un badge d'accès au véhicule 10. L'identifiant 30 peut éventuellement comporter des boutons de commande, à l'aide desquels l'utilisateur peut commander certaines fonctionnalités du véhicule 10.

On prévoit par exemple que certaines fonctionnalités du véhicule (telles que le déverrouillage des portes du véhicule 10 ou le déploiement des rétroviseurs du véhicule 10) soient commandées lorsque l'utilisateur s'approche du véhicule 10 (c'est-à-dire en pratique lorsque la distance D entre l'identifiant 30 et le véhicule 10 devient inférieure à un seuil).

On peut prévoir par ailleurs que d'autres fonctionnalités du véhicule 10 (comme le démarrage du moteur du véhicule 10) ne soient activables que lorsque l'utilisateur (c'est-à-dire en pratique l'identifiant 30) est dans l'habitacle du véhicule 10.

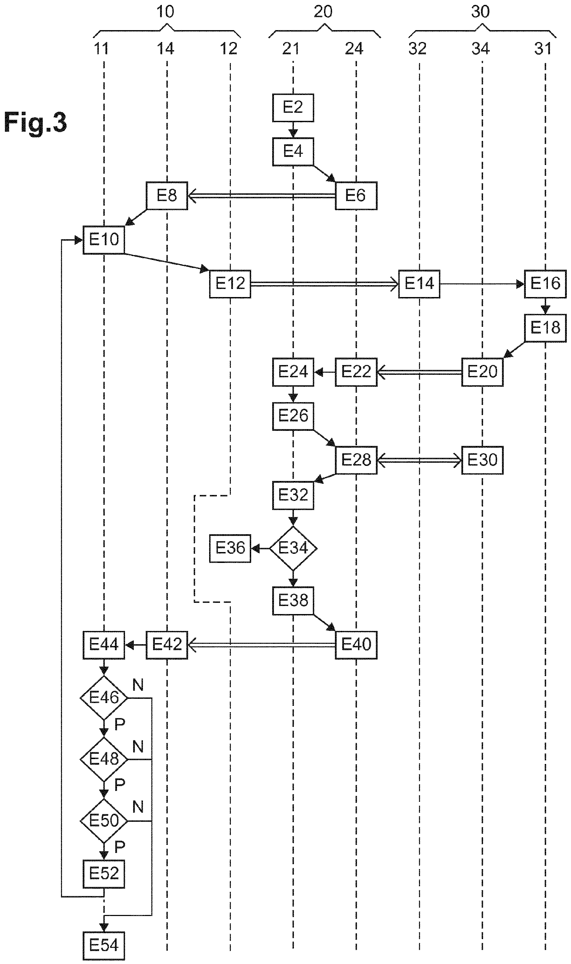

D'autres fonctionnalités du véhicule 10 (telles que la commande distante d'une manœuvre de stationnement du véhicule 10) sont en revanche commandées au moyen du terminal utilisateur 20, par exemple selon le processus du type de celui décrit plus loin en référence à la figure 3.

Comme expliqué plus loin, on propose ici que la commande d'une telle fonctionnalité soit conditionnée non seulement par une proximité suffisante du terminal utilisateur 20 (ou de l'identifiant 30) et du véhicule 10, mais aussi par une proximité suffisante du terminal utilisateur 20 et de l'identifiant 30, ce qui permet de s'assurer que la personne qui manipule le terminal utilisateur 20 est bien également le porteur de l'identifiant 30.

La figure 2 représente les éléments du véhicule 10, du terminal utilisateur 20 et de l'identifiant 30 utiles à la compréhension de l'invention.

Le véhicule 10 comprend un système de commande 15 et un système d'actionnement 17 capable de mettre en œuvre une fonctionnalité du véhicule 10 sous la commande du système de commande 15. Le système d'actionnement 17 comprend pour ce faire au moins un actionneur (non représenté).

Le système d'actionnement 17 est ici un système de stationnement automatique capable de piloter une manœuvre du véhicule 10 sans intervention du conducteur, sur la base de données collectées par des capteurs équipant le véhicule 10.

Le système de commande 15 comprend une unité électronique de commande 11, un module d'émission basse-fréquence 12 et un module de communication 14.

L'unité électronique de commande 11 comprend par exemple un microprocesseur et une mémoire. La mémoire mémorise notamment des instructions de programme qui permettent, lorsqu'elles sont exécutées par le microprocesseur, la mise en œuvre par l'unité électronique de commande 11 des procédés décrits ci-dessous. La mémoire (par exemple une mémoire non-volatile, éventuellement réinscriptible) mémorise également des valeurs ou paramètres utilisés (comme expliqué plus loin) au cours de ces procédés, par exemple une clé cryptographique K, un premier seuil prédéterminé d_{LIM} et un second seuil prédéterminé D_{LIM}.

Certaines de ces valeurs (notamment la clé cryptographique K) sont par exemple inscrites dans la mémoire lors de la fabrication de l'unité électronique de commande 11 (ou, en variante, lors de l'assemblage ou de la mise en service du véhicule 10).

En variante, l'unité électronique de commande 11 pourrait être réalisée sous la forme d'un circuit intégré à application spécifique (ou ASIC pour *"Application Specific Integrated Circuit"*)*.*

Le module d'émission basse-fréquence 12 comprend un circuit d'excitation 120 alimentant une antenne 125 (réalisée par exemple sous la forme d'une ferrite bobinée) de sorte que l'antenne 125 émette un signal électromagnétique basse-fréquence S (typiquement de fréquence inférieure à 150 kHz) lorsque le circuit d'excitation 120 reçoit une commande correspondante de l'unité électronique de commande 11.

Le module de communication 14 est conçu pour établir une liaison sans fil avec d'autres appareils électroniques, ici une liaison de type *"Bluetooth Low Energy"* (ou *"BLE"*). Le module de communication 14 comprend donc également une antenne (non représentée)) conçue pour émettre et recevoir des signaux électromagnétiques haute-fréquence (typiquement de fréquence supérieure à 1 Mhz, voire à 500 MHz), ici dans la bande à 2,4 GHz.

Le terminal utilisateur 20, ici un téléphone mobile, comprend une unité centrale 21, une interface utilisateur 22 (réalisée par exemple par un écran tactile), un module de communication 24 et un module de connexion à un réseau de téléphonie mobile 26.

L'unité centrale 21 comprend par exemple un microprocesseur et une mémoire. La mémoire mémorise notamment des instructions de programme qui permettent, lorsqu'elles sont exécutées par le microprocesseur, la mise en œuvre par l'unité centrale 21 des procédés décrits ci-dessous.

La mémoire (par exemple une mémoire non-volatile réinscriptible) mémorise également la clé cryptographique K déjà mentionnée. La clé cryptographique K a par exemple été reçue d'un serveur distant via le module de connexion 26 lors d'étapes préalables de souscription à un service de commande des fonctionnalités du véhicule 10 au moyen du terminal utilisateur 20.

Le module de communication 24 est conçu pour établir une liaison sans fil avec d'autres appareils électroniques, ici une liaison de type *"Bluetooth Low Energy"* (ou *"BLE"*)*,* notamment avec le système de commande 15 via le module de communication 14 équipant ce dernier.

Le module de connexion 26 comprend par exemple un circuit radiofréquence conçu pour établir une liaison avec une station de base avoisinante d'un réseau de téléphonie mobile et une carte à microcircuit mémorisant des droits d'accès au réseau de téléphone mobile.

L'identifiant 30 comprend une unité de commande 31, un module de communication 34 et un circuit de mesure 32.

L'unité de commande 31 est par exemple réalisée au moyen d'un microprocesseur et d'une mémoire. La mémoire mémorise notamment des instructions de programme qui permettent, lorsqu'elles sont exécutées par le microprocesseur, la mise en œuvre par l'unité de commande 31 des procédés décrits ci-dessous. La mémoire mémorise également des valeurs ou paramètres utilisés au cours de ces procédés, par exemple une information indicative d'une puissance mesurée par le circuit de mesure 32 et la distance D séparant le véhicule 10 et l'identifiant 30 telle qu'estimée sur la base de cette information.

La mémoire (par exemple une mémoire non-volatile, éventuellement réinscriptible) mémorise également la clé cryptographique K déjà mentionnée. La clé cryptographique K a par exemple été inscrite dans la mémoire lors d'une étape de mise en service de l'identifiant 30 en association avec l'unité électronique de commande 11 ou le véhicule 10.

En variante, l'unité de commande 31 pourrait être réalisée sous la forme d'un circuit intégré à application spécifique.

Le circuit de communication 34 est conçu pour établir une liaison sans fil (ici de type *"Bluetooth Low Energy"* ou *"BLE"*) avec d'autres appareils électroniques, en particulier avec le terminal utilisateur 20 via le module de communication 24 de ce dernier, ou éventuellement avec le système de commande 15 du véhicule 10 via son module de communication 14 déjà mentionné.

Le circuit de mesure 32 est quant à lui conçu pour mesurer la puissance, au niveau de l'identifiant 30, du signal électromagnétique émis par le module d'émission basse-fréquence 12 du véhicule 10 (conformément à une technique dite RSSI pour *"Received Signal Strength Indication"*) et pour communiquer une information indicative de la puissance mesurée à l'unité de commande 31.

L'unité de commande 31 est conçu pour en déduire une estimation de la distance D entre le véhicule 10 et l'identifiant 30.

Par ailleurs, grâce aux liaisons sans fil établies entre les différents module de communication 14, 24, 34, des données peuvent être échangées entre l'unité électronique de commande 11 du véhicule 10, l'unité centrale 21 du terminal utilisateur 20 et l'unité de commande 31 de l'identifiant 30, comme expliqué plus loin.

Comme décrit plus loin, du fait que l'unité électronique de commande 11, l'unité centrale 21 et l'unité de commande 31 mémorisent (chacune) la (même) clé cryptographique K, les données échangées entre ces différents dispositifs pourront être chiffrées et déchiffrées au moyen d'algorithmes cryptographiques (de cryptographie symétrique) utilisant (tous) la clé cryptographique K.

On pourrait prévoir en variante que ces dispositifs mémorisent des clés cryptographiques communes à deux dispositifs seulement (afin de chiffrer les échanges entre les deux dispositifs concernés seulement). Chaque dispositif mémorise dans ce cas deux clés cryptographiques associées chacune aux échanges avec un seul des deux autres dispositifs.

Selon une autre variante encore, on peut prévoir que chaque dispositif (parmi l'unité électronique de commande 11, l'unité centrale 21 et l'unité de commande 31) mémorise une clé privée (qui lui est propre) associée à une clé publique au sein d'une infrastructure à clé publique (ou PKI pour *"Public Key Infrastructure"*). Chaque dispositif peut ainsi chiffrer les données à transmettre à un dispositif destinataire au moyen de la clé publique associée à la clé privée du dispositif destinataire.

La figure 3 est un logigramme représentant un exemple de procédé conforme à l'invention.

On considère ici qu'au préalable, une première liaison sans fil a été établie entre le module de communication 34 de l'identifiant 30 et le module de communication 24 du terminal utilisateur 20, et une seconde liaison sans fil a été établie entre le module de communication 24 du terminal utilisateur 20 et le module de communication 14 du système de commande 15 du véhicule 10.

On peut prévoir par ailleurs que, suite à l'établissement de la première liaison sans fil, l'unité centrale 21 du terminal utilisateur 20 ait vérifié (par exemple au moyen d'un protocole défi-réponse) que l'unité de commande 31 de l'identifiant 30 mémorisait bien la clé cryptographique K (afin de s'assurer qu'il s'agissait bien de l'identifiant 30 associé au véhicule 10).

De même, on peut prévoir que, suite à l'établissement de la seconde liaison sans fil, l'unité électronique de commande 11 du véhicule 10 ait vérifié (par exemple au moyen d'un protocole défi-réponse) que l'unité centrale 21 du terminal utilisateur 20 mémorisait bien la clé cryptographique K (afin de s'assurer que le terminal utilisateur 20 était effectivement autorisé à commander certaines fonctionnalités du véhicule).

Le procédé de la figure 2 débute ainsi à l'étape E2 à laquelle l'unité centrale 21 du terminal utilisateur 20 détecte, sur l'interface utilisateur 22, une instruction de l'utilisateur de mettre en œuvre une fonctionnalité (ici une manœuvre de stationnement automatique du véhicule 10). Une telle instruction est par exemple détectée lorsqu'un doigt de l'utilisateur est détecté au niveau d'un bouton virtuel affiché par l'interface utilisateur 22 (ici un écran tactile).

L'unité centrale 21 commande alors (étape E4) au module de communication 24 l'émission d'un message de lancement de la fonctionnalité à destination du système de commande 15.

Le module de communication 24 émet le message de lancement de la fonctionnalité à destination du module de communication 14 du véhicule 10 (étape E6). Le module de communication 14 du véhicule 10 reçoit ainsi ce message de lancement de la fonctionnalité à l'étape E8 et le transmet pour traitement à l'entité électronique de commande 11.

Lorsqu'elle reçoit le message de lancement de la fonctionnalité, l'unité électronique de commande 11 ne procède pas au lancement immédiat de la fonctionnalité, mais vérifie que certaines conditions sont réalisées (notamment une proximité suffisante de l'identifiant et du véhicule, ainsi qu'une proximité suffisante de l'identifiant et du terminal utilisateur), comme expliqué à présent.

Pour ce faire, l'unité électronique de commande 11 émet une commande de génération d'un signal électromagnétique à destination du module d'émission basse-fréquence 12 (étape E10).

Le module d'émission basse-fréquence 12 émet ainsi ce signal électromagnétique (étape E12), lequel est mesuré par le circuit de mesure 32 (étape E14).

Le circuit de mesure 32 produit alors une information indicative de la puissance mesurée qui est communiquée à l'unité de commande 31.

L'unité de commande 31 reçoit l'information indicative de la puissance mesurée et en déduit une estimation de la distance D séparant le véhicule 10 et l'identifiant 30, selon la technique de RSSI déjà mentionnée (étape E16).

L'unité de commande 31 commande alors à l'étape E18 l'émission, via la première liaison sans fil établie entre le module de communication 34 de l'identifiant 30 et le module de communication 24 du terminal utilisateur 20, de données représentatives de la distance D estimée, éventuellement après chiffrement de ces données au moyen d'un algorithme de chiffrement utilisant la clé cryptographique K.

Dans un mode de réalisation alternatif, l'unité de commande 31 commande alors à l'étape E18' l'émission, via la liaison sans fil établie entre le module de communication 34 de l'identifiant 30 et le module de communication 14 du système de commande 15 du véhicule 10, de données représentatives de la distance D estimée, éventuellement après chiffrement de ces données au moyen d'un algorithme de chiffrement utilisant la clé cryptographique K.

Dans ce mode de réalisation, on peut prévoir que cette émission 18' se fasse en alternance avec les échanges de données entre le module de communication 34 de l'identifiant 30 et le module de communication 14 du système de commande 15 du véhicule 10.

De manière alternative, dans le cadre des échanges de données entre le module de communication 34 de l'identifiant 30 et le module de communication 14 du système de commande 15 du véhicule 10, utilisées pour évaluer la distance D, on peut imaginer d'utiliser une sous partie de tous les canaux utilisés pour évaluer la mesure de distance D, et le reste pour la transmission par le module de communication 34 de l'identifiant 30 de la mesure de distance D précédente, au module de communication 14 du système de commande 15 du véhicule 10.

Les données représentatives de la distance D (éventuellement chiffrées) sont ainsi transmises par le module de communication 34 à l'étape E20 et reçues par le module de communication 24 à l'étape E22.

Les données représentatives de la distance D (éventuellement chiffrées) sont transmises du module de communication 24 à l'unité centrale 21, laquelle mémorise à l'étape E24 ces données représentatives de la distance D (éventuellement après déchiffrement au moyen d'un algorithme de déchiffrement utilisant la clé cryptographique K).

L'unité centrale 21 commande alors à l'étape E26 la mise en œuvre par le module de communication 24 d'un processus d'évaluation de la distance d séparant le module de communication 24 et le module de communication 34 par mesure de la puissance des signaux reçus par le module de communication 24 dans le cadre de la première liaison sans fil précitée. Il s'agit là encore d'une technique de type RSSI, appliquée cette fois entre les deux modules de communication 24, 34.

Le module de communication 24 du terminal utilisateur 20 procède ainsi à l'étape E28 à la mesure de la puissance de signaux électromagnétiques reçus en provenance du module de communication 34 de l'identifiant 30 dans le cadre de la première liaison sans fil (l'émission de ces signaux électromagnétiques étant réalisée par le module de communication 34 au cours d'une étape E30 représentée sur la figure 3, par exemple après réception par le module de communication 34 d'une requête dédiée en provenance du module de communication 24).

L'unité centrale 21 peut ainsi évaluer à l'étape E32 la distance d entre le terminal utilisateur 20 et l'identifiant 30 sur la base de la mesure de puissance effectuée par le module de communication 24 à l'étape E28.

Pour la clarté de l'exposé, on a décrit ci-dessus les étapes de réception de données représentative de la distance D (étape E22) et de mesure de la puissance des signaux reçus (étape E28) en tant que deux étapes distinctes, impliquant chacune des échanges avec l'unité centrale 21. On pourra toutefois éventuellement envisager en pratique que le module de communication 24 effectue simultanément la réception des données représentatives de la distance D et la mesure de la puissance des signaux reçus, et transmette simultanément les données reçues et la puissance mesurée à l'unité centrale 21.

Le procédé se poursuit quoi qu'il en soit à l'étape E34 à laquelle l'unité centrale 21 détermine si l'utilisateur effectue une action prédéfinie au niveau de l'interface utilisateur 22.

En effet, dans l'exemple décrit ici, on souhaite que l'utilisateur confirme sa présence active au niveau du terminal utilisateur 20 tout au long de la mise en œuvre de la fonctionnalité (ici la manœuvre de stationnement automatique), comme expliqué par exemple dans la demande de brevet WO2015/003909.

Si l'unité centrale 21 détermine que l'utilisateur n'effectue pas l'action prédéfinie, la mise en œuvre de la fonctionnalité ne doit pas être poursuivie. On procède alors à l'étape E36 à laquelle l'unité centrale 21 met par exemple fin au processus décrit ici (de sorte qu'en l'absence de réception des informations attendues comme décrit ci-dessous à l'étape E44, l'unité électronique de commande 11 du véhicule 10 commandera l'arrêt de la manœuvre). En variante, on peut prévoir que l'unité centrale 21 commande l'envoi d'un message (d'erreur) dédié entraînant l'arrêt de la manœuvre à l'unité électronique de commande 11 via la seconde liaison sans fil établie entre le module de communication 24 et le module de communication 14.

Si l'unité centrale 21 détermine que l'utilisateur effectue l'action prédéfinie, l'unité centrale 21 commande à l'étape E38 l'émission, par le module de communication 24, des données représentatives de la distance D entre le véhicule 10 et l'identifiant 30, de données représentatives de la distance d entre l'identifiant 30 et le terminal utilisateur 20 (évaluée à l'étape E32) et de données indicatives de l'action conforme de l'utilisateur (vérifiée à l'étape E34).

Les données émises peuvent être au préalable chiffrées par application d'un algorithme de chiffrement utilisant la clé cryptographique K.

Les données (éventuellement chiffrées) sont ainsi émises par le module de communication 24 à l'étape E40, transmises via la seconde liaison sans fil et reçues par le module de communication 14 à l'étape E42.

L'unité électronique de commande 11 reçoit ainsi à l'étape E44 (éventuellement sous forme chiffrée) les données représentatives de la distance D entre le véhicule 10 et l'identifiant 30, les données représentatives de la distance d entre l'identifiant 30 et le terminal utilisateur 20 et les données indicatives de l'action conforme de l'utilisateur. L'unité électronique de commande 11 procède éventuellement au déchiffrement de ces données au moyen d'un algorithme de déchiffrement utilisant la clé cryptographique K.

L'unité électronique de commande 11 vérifie alors à l'étape E46 que les données indicatives de l'action conforme de l'utilisateur correspondent bien aux données attendues.

Dans la négative (ce qui ne devrait pas se produire en fonctionnement normal, mais seulement en cas de dysfonctionnement, ou d'attaque par un tiers), le procédé se poursuit à l'étape E54 à laquelle l'unité électronique de commande 11 émet une commande d'arrêt de la fonctionnalité à destination du système d'actionnement 17, ce qui provoque ici l'arrêt de la manœuvre du véhicule 10.

Si les données indicatives de l'action conforme de l'utilisateur correspondent aux données attendues, l'unité électronique de commande 11 détermine à l'étape E48 si les données représentatives de la distance d entre l'identifiant 30 et le terminal utilisateur 20 indiquent que cette distance d est inférieure au premier seuil prédéterminé D_{LIM} (égal par exemple à 1 m).

Dans la négative (ce qui est par exemple le cas lorsque l'identifiant a été posé à proximité du véhicule mais que l'utilisateur s'éloigne trop du véhicule et cherche toujours à faire manœuvrer le véhicule), l'unité électronique de commande 11 procède à l'étape E54 déjà décrite à laquelle elle émet une commande d'arrêt de la fonctionnalité, ce qui entraîne ici l'arrêt de la manœuvre du véhicule.

Si au contraire la distance d est effectivement inférieure au premier seuil prédéterminé D_{LIM}, l'unité électronique de commande 11 détermine à l'étape E50 si les données représentatives de la distance D entre le véhicule 10 et l'identifiant 30 indiquent que cette distance D est inférieure au second seuil prédéterminé D_{LIM} (égal par exemple à 10 m). En variante, l'unité électronique de commande 11 pourrait déterminer lors de l'étape E50 si les données représentatives de la distance D entre le véhicule 10 et l'identifiant 30 indiquent que cette distance D est comprise dans un intervalle prédéfini.

Dans l'affirmative, la mise en œuvre de la fonctionnalité peut se poursuivre (étape E52), ce qui implique éventuellement (mais non nécessairement) la transmission d'une information correspondante de l'unité électronique de commande 11 au système d'actionnement 17.

Dans la négative, l'unité électronique de commande 11 procède à l'étape E54 déjà décrite, qui a pour conséquence l'arrêt de la fonctionnalité.

On comprend que le procédé qui vient d'être décrit permet de conditionner la (poursuite de la) mise en œuvre de la fonctionnalité à la proximité suffisante (par rapport au véhicule 10) de l'utilisateur qui manipule le terminal utilisateur 20.

Dans ce procédé, l'utilisation d'une évaluation de la distance D entre l'identifiant 30 et le véhicule 10 au moyen du module d'émission basse fréquence 12 et du circuit de mesure 32 permet une évaluation précise de la distance D.

La vérification de la proximité de l'identifiant 30 et du terminal utilisateur 20 (étape E48) permet quant à elle de s'assurer que cette distance D utilisée donne une idée correcte de la distance séparant le terminal utilisateur 20 et le véhicule 10.

En effet, sans cette vérification de la proximité de l'identifiant 30 et du terminal utilisateur 20, l'identifiant 30 pourrait être laissée à proximité du véhicule 10 et la mise en œuvre de la fonctionnalité serait poursuivie même lorsque le terminal utilisateur 20 est éloigné du véhicule 10.

Le mode de réalisation décrit ci-dessus est également avantageux du fait de l'utilisation des modules de communication 24, 34 pour évaluer la distance d entre le terminal utilisateur 20 et l'identifiant 30. Une telle évaluation est en effet couramment proposée dans de tels modules et suffisamment précise pour des distances ayant l'ordre de grandeur utilisé (1 m).

L'invention n'est toutefois pas limitée l'exemple de réalisation qui vient d'être décrit.

On peut prévoir par exemple en variante que l'identifiant 30 envoie directement les données représentatives de la distance D au système de commande 15 (au lieu de les transmettre au terminal utilisateur comme indiqué ci-dessus à l'étape E20).

Selon une autre variante, on peut prévoir en outre que l'évaluation de la distance d entre le terminal utilisateur 20 et l'identifiant 30 soit effectuée au niveau de l'identifiant 30 (par exemple par mesure de puissance des signaux électromagnétiques reçus par le module de communication 34 dans le cadre de la première liaison sans fil) et que des données représentatives de cette distance d évaluée soient transmises au système de commande 15.

Par ailleurs, bien que l'on propose ci-dessus d'évaluer la distance D entre le véhicule 10 et l'identifiant 30 au moyen d'une technique de type RSSI, il est également envisageable en variante d'évaluer cette distance D sur la base d'une mesure de déphasage de signaux électromagnétiques, par exemple des signaux électromagnétiques dans la bande à 2,4 GHz (tels que des signaux échangés entre les modules de communication 14 et 34) ou des impulsions Ultra-Large Bande (ou UWB pour *"Ultra-Wide Band"*)*.*

Selon une autre variante encore, il est envisageable d'évaluer la distance séparant le véhicule 10 et le terminal utilisateur 20 (et de l'utiliser en lieu et place de la distance D mentionnée plus haut), par exemple par mesure de puissance ou de déphasage de signaux électromagnétiques échangés entre les modules de communication 14 et 24.

La figure 4 représente schématiquement les éléments du véhicule 10, du terminal utilisateur 20 et de l'identifiant 30 dans une variante de réalisation de l'invention.

La plupart de ces éléments sont identiques à ceux de la figure 2 et ne seront donc pas décrits à nouveau.

En plus de ses composants visibles en figure 2 et décrits ci-dessus, le terminal utilisateur 20 représenté en figure 4 comprend un circuit de communication en champ proche 28, conçu pour établir une liaison sans fil de proximité avec un autre circuit du même type, par exemple une liaison de type NFC (pour *"Near Field Communication"*)*.*

L'identifiant 30 comprend lui aussi un circuit de communication en champ proche 38 (en lieu et place du module de communication 34 comme représenté en figure 4, ou en plus d'un tel module de communication), conçu pour coopérer avec le circuit de communication en champ proche 28 du terminal utilisateur 20.

Une liaison sans fil en champ proche (ou liaison sans fil de proximité), ici une liaison de type NFC, peut ainsi s'établir entre les circuit de communication en champ proche 28, 38 lorsque le terminal utilisateur 20 et l'identifiant 30 sont suffisamment proches ; l'unité centrale 21 du terminal utilisateur 20 et l'unité de commande 31 de l'identifiant 30 peuvent alors échanger des données via cette liaison sans fil en champ proche.

Une telle liaison sans fil en champ proche a typiquement une portée inférieure à 1 m, généralement comprise en 5 cm et 20 cm.

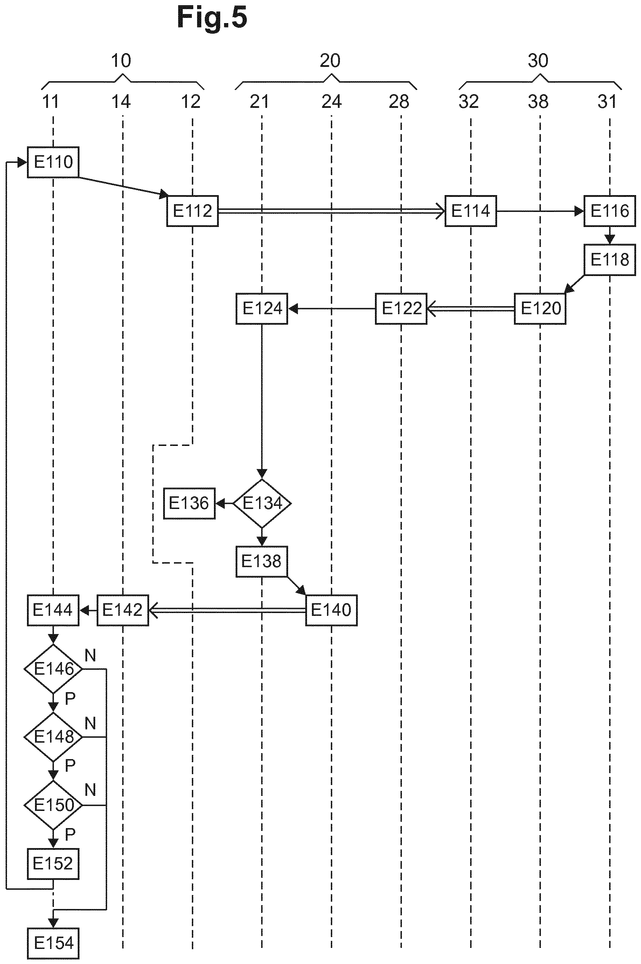

La figure 5 est un logigramme représentant un exemple de procédé mis en œuvre par les dispositifs représentés en figure 4.

Dans ce procédé, comme pour celui décrit ci-dessus en référence à la figure 3, l'unité électronique de commande 11 vérifie que certaines conditions sont réalisées (notamment une proximité suffisante de l'identifiant 30 et du véhicule 10, ainsi qu'une proximité suffisante de l'identifiant 30 et du terminal utilisateur 20) avant de lancer une fonctionnalité ou d'autoriser la poursuite de sa mise en œuvre. Un tel procédé peut éventuellement être initié par des étapes semblables aux étapes E2 à E8 décrites plus haut en référence à la figure 3.

Le procédé débute à l'étape E110, à laquelle l'unité électronique de commande 11 émet une commande de génération d'un signal électromagnétique à destination du module d'émission basse-fréquence 12.

Le module d'émission basse-fréquence 12 émet ainsi ce signal électromagnétique (étape E112), lequel est mesuré par le circuit de mesure 32 (étape E114).

Le circuit de mesure 32 produit alors une information indicative de la puissance mesurée qui est communiquée à l'unité de commande 31.

L'unité de commande 31 reçoit l'information indicative de la puissance mesurée et en déduit une estimation de la distance D séparant le véhicule 10 et l'identifiant 30, selon la technique dite RSSI (étape E116).

L'unité de commande 31 commande alors à l'étape E118 l'émission, via la liaison sans fil en champ proche (établie entre circuit de communication en champ proche 38 de l'identifiant 30 et le circuit de communication en champ proche 28 du terminal utilisateur 20), de données représentatives de la distance D estimée, éventuellement après chiffrement de ces données au moyen d'un algorithme de chiffrement utilisant la clé cryptographique K.

Les données représentatives de la distance D (éventuellement chiffrées) sont ainsi transmises par le circuit de communication en champ proche 38 à l'étape E120 et reçues par le circuit de communication en champ proche 28 à l'étape E122.

Cette transmission des données représentatives de la distance D implique que l'identifiant 30 et le terminal utilisateur 20 soient suffisamment proches (i.e. soient séparés par une distance inférieure à la portée de la liaison sans fil en champ proche), faute de quoi la liaison en champ proche est perdue et les données ne peuvent être transmises.

Les données représentatives de la distance D (éventuellement chiffrées) sont transmises du circuit de communication en champ proche 28 à l'unité centrale 21, laquelle mémorise à l'étape E124 ces données représentatives de la distance D (éventuellement après déchiffrement au moyen d'un algorithme de déchiffrement utilisant la clé cryptographique K).

L'unité centrale 21 détermine alors à l'étape E134 si l'utilisateur effectue une action prédéfinie au niveau de l'interface utilisateur 22.

Dans la négative, la mise en œuvre de la fonctionnalité ne doit pas être poursuivie. On procède alors à l'étape E136 à laquelle l'unité centrale 21 met par exemple fin au processus décrit ici. En variante, on peut prévoir que l'unité centrale 21 commande l'envoi d'un message (d'erreur) dédié entraînant l'arrêt de la manœuvre à l'unité électronique de commande 11 via la liaison sans fil établie entre le module de communication 24 et le module de communication 14.

Si l'unité centrale 21 détermine à l'étape E134 que l'utilisateur effectue l'action prédéfinie, l'unité centrale 21 commande à l'étape E138 l'émission, par le module de communication 24, des données représentatives de la distance D entre le véhicule 10 et l'identifiant 30, et de données indicatives de l'action conforme de l'utilisateur (vérifiée à l'étape E134).

Les données émises peuvent être au préalable chiffrées par application d'un algorithme de chiffrement utilisant la clé cryptographique K.

Les données (éventuellement chiffrées) sont ainsi émises par le module de communication 24 à l'étape E140, transmises via la liaison sans fil établie entre les modules de communications 24, 14 (ici une liaison de type *"Bluetooth Low Energy"*), et reçues par le module de communication 14 à l'étape E42.

L'unité électronique de commande 11 reçoit ainsi à l'étape E144 (éventuellement sous forme chiffrée) les données représentatives de la distance D entre le véhicule 10 et l'identifiant 30, et les données indicatives de l'action conforme de l'utilisateur. L'unité électronique de commande 11 procède éventuellement au déchiffrement de ces données au moyen d'un algorithme de déchiffrement utilisant la clé cryptographique K.

L'unité électronique de commande 11 vérifie alors à l'étape E46 que les données indicatives de l'action conforme de l'utilisateur correspondent bien aux données attendues.

Dans la négative (ce qui ne devrait pas se produire en fonctionnement normal, mais seulement en cas de dysfonctionnement, ou d'attaque par un tiers), le procédé se poursuit à l'étape E154 à laquelle l'unité électronique de commande 11 émet une commande d'arrêt de la fonctionnalité à destination du système d'actionnement 17, ce qui provoque ici l'arrêt de la manœuvre du véhicule 10.

Si les données indicatives de l'action conforme de l'utilisateur correspondent aux données attendues, l'unité électronique de commande 11 détermine à l'étape E148 si les données représentatives de la distance D entre le véhicule 10 et l'identifiant 30 ont été reçues à l'étape E144, ce qui est représentatif de la distance d entre le terminal utilisateur 20 et l'identifiant 30 (puisque, comme expliqué ci-dessus, les données représentatives de la distance D ne sont pas transmises de l'identifiant 30 au terminal utilisateur 20 lorsque la distance d entre l'identifiant 30 et le terminal utilisateur 30 est supérieure à un seuil, et ne peuvent dans ce cas être reçues par le véhicule 10 à l'étape E144).

Dans la négative (ce qui est par exemple le cas lorsque l'identifiant a été posé à proximité du véhicule mais que l'utilisateur s'éloigne trop du véhicule et que la liaison sans fil en champ proche entre le terminal utilisateur 20 et l'identifiant 30 a été interrompu), l'unité électronique de commande 11 procède à l'étape E154 déjà décrite à laquelle elle émet une commande d'arrêt de la fonctionnalité, ce qui entraîne ici l'arrêt de la manœuvre du véhicule.

Si au contraire la distance d est effectivement inférieure au premier seuil prédéterminé d_{LIM} (correspondant ici à la portée de la liaison sans fil en champ proche) et que l'unité électronique de commande 11 a donc effectivement reçu les données représentatives de la distance D entre le véhicule 10 et l'identifiant 30, l'unité électronique de commande 11 détermine à l'étape E150 si ces données représentatives de la distance D entre le véhicule 10 et l'identifiant 30 indiquent que cette distance D est inférieure au second seuil prédéterminé D_{LIM} (égal par exemple à 10 m).

Dans l'affirmative, la mise en œuvre de la fonctionnalité peut se poursuivre (étape E152), ce qui implique éventuellement (mais non nécessairement) la transmission d'une information correspondante de l'unité électronique de commande 11 au système d'actionnement 17.

Dans la négative, l'unité électronique de commande 11 procède à l'étape E154 déjà décrite, qui a pour conséquence l'arrêt de la fonctionnalité.

## Revendications

1. Procédé de commande d'une fonctionnalité d'un véhicule (10) au moyen d'un terminal utilisateur (20), **caractérisé par** les étapes suivantes :
- obtention d'une information représentative d'une distance (d) entre le terminal utilisateur (20) et un identifiant (30) ;
- mise en œuvre de la fonctionnalité seulement si ladite information indique que ladite distance (d) est inférieure à un seuil prédéterminé
la distance (d) étant évaluée par le terminal utilisateur (20), par mesure (E28) de puissance de signaux électromagnétiques échangés entre deux modules de communication (34, 24) équipant respectivement l'identifiant (30) et le terminal utilisateur (20),
**caractérisé en ce que** des données représentatives de la distance (d) entre l'identifiant (30) et le terminal utilisateur (20) sont transmises (E40) du terminal utilisateur (20) au véhicule (10).

2. Procédé de commande selon la revendication 1, dans lequel la fonctionnalité est mise en œuvre seulement si en outre une distance entre le terminal utilisateur (20) et le véhicule (10) est inférieure à un autre seuil prédéterminé.

3. Procédé de commande selon la revendication 1, dans lequel la fonctionnalité est mise en œuvre seulement si en outre une distance (D) entre l'identifiant (30) et le véhicule (10) est inférieure à un autre seuil prédéterminé.

4. Procédé de commande selon la revendication 3, dans lequel la distance (D) entre l'identifiant (30) et le véhicule (10) est évaluée par mesure (E14) de puissance d'un signal électromagnétique généré par un module d'émission basse-fréquence (12) équipant le véhicule (10).

5. Procédé de commande selon la revendication 3 ou 4, dans lequel des données représentatives de la distance (D) entre l'identifiant (30) et le véhicule (10) sont transmises de l'identifiant (30) au véhicule (10).

6. Procédé de commande selon la revendication 3 ou 4, dans lequel des données représentatives de la distance (D) entre l'identifiant (30) et le véhicule (10) sont transmises (E20) de l'identifiant (30) au terminal utilisateur (20).

7. Procédé de commande selon la revendication 6, dans lequel les données représentatives de la distance (D) entre l'identifiant (30) et le véhicule (10) sont transmises (E20) de l'identifiant (30) au terminal utilisateur (20) via une liaison sans fil en champ proche.

8. Procédé de commande selon l'une des revendications 1 à 7, dans lequel les données représentatives de la distance (D) entre l'identifiant (30) et le véhicule (10) sont transmises (E40) du terminal utilisateur (20) au véhicule (10).

9. Procédé de commande selon l'une des revendications 1 à 8, dans lequel des données indicatives d'une action sur une interface utilisateur (22) sont transmises (E40) du terminal utilisateur (20) au véhicule (10).

10. Procédé de commande selon l'une des revendications 1 à 9, dans lequel la fonctionnalité est une manœuvre de stationnement automatique.

11. Système de commande (15) pour véhicule (10) comprenant un module de communication (14) conçu pour établir une liaison sans fil avec un terminal utilisateur (20), et une unité électronique de commande (11) conçue pour commander au moins une fonctionnalité du véhicule (10) en fonction d'informations reçues du terminal utilisateur (20), l'unité électronique de commande (11) étant conçue pour obtenir une information représentative d'une distance (d) entre le terminal utilisateur (20) et un identifiant (30), et pour autoriser la mise en œuvre de la fonctionnalité seulement si ladite information indique que ladite distance (d) est inférieure à un seuil prédéterminé
la distance (d) étant évaluée par le terminal utilisateur (20), par mesure (E28) de puissance de signaux électromagnétiques échangés entre deux modules de communication (34, 24) équipant respectivement l'identifiant (30) et le terminal utilisateur (20),
**caractérisé en ce que** des données représentatives de la distance (d) entre l'identifiant (30) et le terminal utilisateur (20) sont transmises (E40) du terminal utilisateur (20) au véhicule (10).

## Patentansprüche

1. Verfahren zum Steuern einer Funktion eines Fahrzeugs (10) mittels eines Benutzerendgeräts (20), **gekennzeichnet durch** die folgenden Schritte:
- Erhalt einer für einen Abstand (d) zwischen dem Benutzerendgerät (20) und einer Kennung (30) repräsentativen Information;
- Durchführung der Funktion nur, wenn die Information anzeigt, dass der Abstand (d) geringer als eine vorbestimmte Schwelle ist,
wobei der Abstand (d) vom Benutzerendgerät (20) durch Messung (E28) der Leistung elektromagnetischer Signale geschätzt wird, die zwischen zwei Kommunikationsmodulen (34, 24) ausgetauscht werden, die die Kennung (30) bzw. das Benutzerendgerät (20) bestücken,
**dadurch gekennzeichnet, dass** für den Abstand (d) zwischen der Kennung (30) und dem Benutzerendgerät (20) repräsentative Daten vom Benutzerendgerät (20) an das Fahrzeug (10) übertragen werden (E40).

2. Steuerverfahren nach Anspruch 1, wobei die Funktion nur durchgeführt wird, wenn außerdem ein Abstand zwischen dem Benutzerendgerät (20) und dem Fahrzeug (10) geringer als eine weitere vorbestimmte Schwelle ist.

3. Steuerverfahren nach Anspruch 1, wobei die Funktion nur durchgeführt wird, wenn außerdem ein Abstand (D) zwischen der Kennung (30) und dem Fahrzeug (10) geringer als eine weitere vorbestimmte Schwelle ist.

4. Steuerverfahren nach Anspruch 3, wobei der Abstand (D) zwischen der Kennung (30) und dem Fahrzeug (10) durch Messung (E14) der Leistung eines elektromagnetischen Signals geschätzt wird, das von einem Niederfrequenzemissionsmodul (12) generiert wird, das das Fahrzeug (10) bestückt.

5. Steuerverfahren nach Anspruch 3 oder 4, wobei für den Abstand (D) zwischen der Kennung (30) und dem Fahrzeug (10) repräsentative Daten von der Kennung (30) an das Fahrzeug (10) übertragen werden.

6. Steuerverfahren nach Anspruch 3 oder 4, wobei für den Abstand (D) zwischen der Kennung (30) und dem Fahrzeug (10) repräsentative Daten von der Kennung (30) an das Benutzerendgerät (20) übertragen werden (E20).

7. Steuerverfahren nach Anspruch 6, wobei die für den Abstand (D) zwischen der Kennung (30) und dem Fahrzeug (10) repräsentativen Daten über eine drahtlose Nahfeldverbindung von der Kennung (30) an das Benutzerendgerät (20) übertragen werden (E20) .

8. Steuerverfahren nach einem der Ansprüche 1 bis 7, wobei die für den Abstand (D) zwischen der Kennung (30) und dem Fahrzeug (10) repräsentativen Daten vom Benutzerendgerät (20) an das Fahrzeug (10) übertragen werden (E40).

9. Steuerverfahren nach einem der Ansprüche 1 bis 8, wobei eine Einwirkung auf eine Benutzerschnittstelle (22) anzeigende Daten vom Benutzerendgerät (20) an das Fahrzeug (10) übertragen werden (E40).

10. Steuerverfahren nach einem der Ansprüche 1 bis 9, wobei die Funktion ein automatisches Einparkmanöver ist.

11. Steuersystem (15) für ein Fahrzeug (10), das ein Kommunikationsmodul (14), das konzipiert ist, um eine drahtlose Verbindung mit einem Benutzerendgerät (20) aufzubauen, und eine elektronische Steuereinheit (11) enthält, die konzipiert ist, um mindestens eine Funktion des Fahrzeugs (10) abhängig von vom Benutzerendgerät (20) empfangenen Informationen zu steuern, wobei die elektronische Steuereinheit (11) konzipiert ist, um eine für einen Abstand (d) zwischen dem Benutzerendgerät (20) und einer Kennung (30) repräsentative Information zu erhalten, und um die Durchführung der Funktion nur zu erlauben, wenn die Information anzeigt, dass der Abstand (d) geringer ist als eine vorbestimmte Schwelle,
wobei der Abstand (d) vom Benutzerendgerät (20) durch Messung (E28) der Leistung elektromagnetischer Signale geschätzt wird, die zwischen zwei Kommunikationsmodulen (34, 24) ausgetauscht werden, die die Kennung (30) bzw. das Benutzerendgerät (20) bestücken,
**dadurch gekennzeichnet, dass** für den Abstand (d) zwischen der Kennung (30) und dem Benutzerendgerät (20) repräsentative Daten vom Benutzerendgerät (20) an das Fahrzeug (10) übertragen werden (E40).

## Claims

1. Method for controlling a functionality of a vehicle (10) by way of a user terminal (20), **characterized by** the following steps:
- acquiring information representative of a distance (d) between the user terminal (20) and an identifier (30);
- implementing the functionality only if said information indicates that said distance (d) is less than a predetermined threshold,
the distance (d) being evaluated by the user terminal (20) by measuring (E28) the strength of electromagnetic signals exchanged between two communication modules (34, 24) fitted respectively to the identifier (30) and the user terminal (20),
**characterized in that** data representative of the distance (d) between the identifier (30) and the user terminal (20) are transmitted (E40) from the user terminal (20) to the vehicle (10).

2. Control method according to Claim 1, wherein the functionality is implemented only if a distance between the user terminal (20) and the vehicle (10) is furthermore less than another predetermined threshold.

3. Control method according to Claim 1, wherein the functionality is implemented only if a distance (D) between the identifier (30) and the vehicle (10) is furthermore less than another predetermined threshold.

4. Control method according to Claim 3, wherein the distance (D) between the identifier (30) and the vehicle (10) is evaluated by measuring (E14) the strength of an electromagnetic signal generated by a low-frequency transmission module (12) fitted to the vehicle (10).

5. Control method according to Claim 3 or 4, wherein data representative of the distance (D) between the identifier (30) and the vehicle (10) are transmitted from the identifier (30) to the vehicle (10).

6. Control method according to Claim 3 or 4, wherein data representative of the distance (D) between the identifier (30) and the vehicle (10) are transmitted (E20) from the identifier (30) to the user terminal (20).

7. Control method according to Claim 6, wherein the data representative of the distance (D) between the identifier (30) and the vehicle (10) are transmitted (E20) from the identifier (30) to the user terminal (20) via a near-field wireless link.

8. Control method according to one of Claims 1 to 7, wherein the data representative of the distance (D) between the identifier (30) and the vehicle (10) are transmitted (E40) from the user terminal (20) to the vehicle (10).

9. Control method according to one of Claims 1 to 8, wherein data indicative of an action on a user interface (22) are transmitted (E40) from the user terminal (20) to the vehicle (10).

10. Control method according to one of Claims 1 to 9, wherein the functionality is an automatic parking manoeuvre.

11. Control system (15) for a vehicle (10) comprising a communication module (14) designed to establish a wireless link with a user terminal (20), and an electronic control unit (11) designed to control at least one functionality of the vehicle (10) on the basis of information received from the user terminal (20), the electronic control unit (11) being designed to acquire information representative of a distance (d) between the user terminal (20) and an identifier (30), and to authorize the implementation of the functionality only if said information indicates that said distance (d) is less than a predetermined threshold,
the distance (d) being evaluated by the user terminal (20) by measuring (E28) the strength of electromagnetic signals exchanged between two communication modules (34, 24) fitted respectively to the identifier (30) and the user terminal (20),
**characterized in that** data representative of the distance (d) between the identifier (30) and the user terminal (20) are transmitted (E40) from the user terminal (20) to the vehicle (10).
